# EUROPEAN PATENT SPECIFICATION

(11) **EP 2 777 853 B1**
(45) Date of publication and mention of the grant of the patent: **05.08.2015**
(21) Application number: 14159899.5
(22) Date of filing: 14.03.2014
(51) Int. Cl.: B23D 47/02, B28D 1/04, B28D 7/02

(54) **Portable tile saw**
Tragbare Fliesensäge
Scie de tuile portable

(30) Priority: 15.03.2013 US 201313832287
(43) Date of publication of application: 17.09.2014
(73) Proprietor: Techtronic Power Tools Technology Limited, Road Town, Tortola (VG)
(72) Inventor: Ipatenco, Alek, Belton, SC South Carolina 29627 (US); Hart, Michael, Anderson, SC South Carolina 29621 (US); Tennant, C. Scott, Clemson, SC South Carolina 29631 (US); Brazell, Kenneth M, Piedmont, SC South Carolina 29673 (US); Jerabek, Jesse J., Anderson, SC South Carolina 29621 (US); Ohi, Taku, Greer, SC South Carolina 29650 (US)
(74) Representative: Kenrick, Mark Lloyd

(56) References cited:
- US-A1- 2002 100 353
- US-A1- 2005 120 849
- US-B1- 6 182 935

## Description

### BACKGROUND

The present invention relates to a portable tile saw, as per the preamble of claim 1.

US 2002/0100353 discloses an example of such a portable tile saw. US 2002/0100353

### SUMMARY

The invention provides a tile saw as per claim 1. The tile saw includes a frame having a guide that extends from a first end to a second end. A first engagement member and a second engagement member are coupled to the frame and disposed adjacent the first end, and a third engagement member is disposed adjacent the third end. A saw is coupled to the frame and is operable to rotate a cutting blade about an axis and a table is operable to support the workpiece. The table is coupled to the guide and is operable to move the workpiece into cutting engagement with the cutting blade. A pan is positioned to support the frame and to contain a quantity of coolant. A fourth engagement member is coupled to the third engagement member, a first latch is selectively coupled to the first engagement member, and a second latch is selectively coupled to the second engagement member. The first latch, the second latch, and the fourth engagement member cooperate to restrict movement of the frame with respect to the pan.

In another construction, the tile saw includes a frame having a first guide rail, a second guide rail, an engagement portion and a saw coupled to the frame and operable to rotate a cutting blade about an axis that is substantially normal to the first guide rail and the second guide rail. A table is operable to support the workpiece. The table is coupled to the first guide rail and the second guide rail and is operable to move the workpiece into cutting engagement with the cutting blade. A pan is positioned to support the frame and to contain a quantity of coolant. The pan includes a first end adjacent a first end of the first guide rail and a second end adjacent a second end of the guide rail. A latch is coupled to the first end of the pan and selectively engageable with the engagement portion of the frame to selectively attach the pan to the frame. A pair of wheels is coupled to the pan adjacent the second end of the pan and a handle is coupled to the first end of the pan.

In yet another construction, the tile saw includes a frame, a saw coupled to the frame, and a table movable with respect to the saw to move a workpiece into engagement with a cutting blade. The tile saw includes a pan selectively coupled to the frame and operable to contain a liquid coolant. The pan includes a first end and a second end. A slot is formed at a first end of the pan and is operable to receive a portion of the frame. A first latch is attached to the pan and is selectively coupled to the frame, and a second latch is attached to the pan and selectively coupled to the frame. The first latch, the second latch, and the slot cooperate to fixedly attach the frame to the pan. A pair of wheels is coupled to the pan adjacent the first end of the pan and a handle is coupled to the second end of the pan.

Other aspects of the invention will become apparent by consideration of the detailed description and accompanying drawings.

### BRIEF DESCRIPTION OF THE DRAWINGS

Fig. 1 is a perspective view of a wet tile saw supported on a stand;
Fig. 2 is a perspective view of a pan for a wet tile saw supported on the stand;
Fig. 3 is an enlarged perspective view of a latch;
Fig. 4 is an enlarged perspective view of one end of the pan and frame in an assembled condition;
Fig. 5 is an enlarged perspective view of the end of the pan of Fig. 4 with the frame removed;
Fig. 6 is a perspective view of a bottom of one end of the pan illustrating a pair of wheels; and
Fig. 7 is a perspective view of a handle of the pan.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

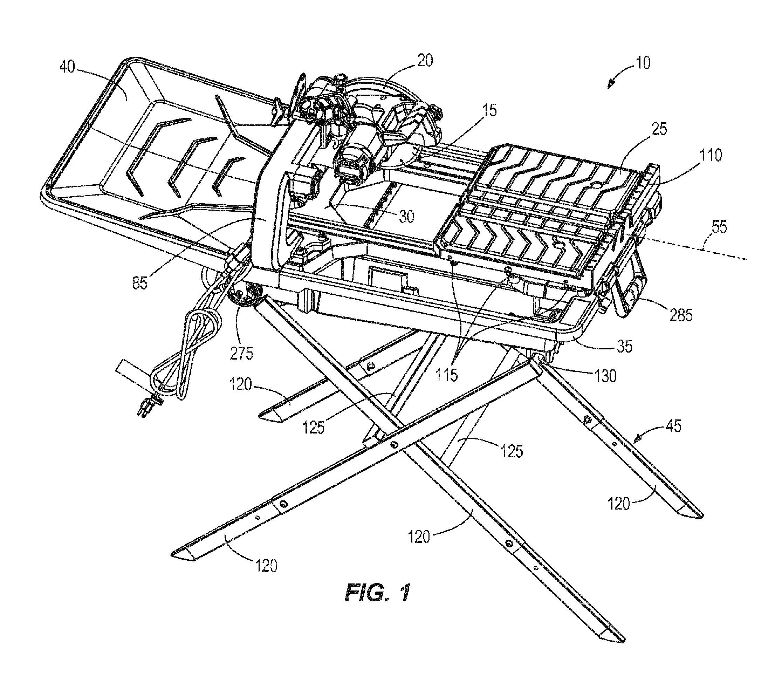

The present invention provides a wet tile saw 10 that can be used to accurately and quickly cut construction materials such as ceramic, marble, or granite tiles and the like. The tile saw 10 employs a lubricant such as water to cool a cutting blade 15 and to carry away debris removed during the cutting process. As illustrated in Fig. 1, the wet tile saw 10 includes a saw 20, a table 25, a frame 30, a pan 35, an extension 40, and a stand 45 that supports the other components at a suitable working height.

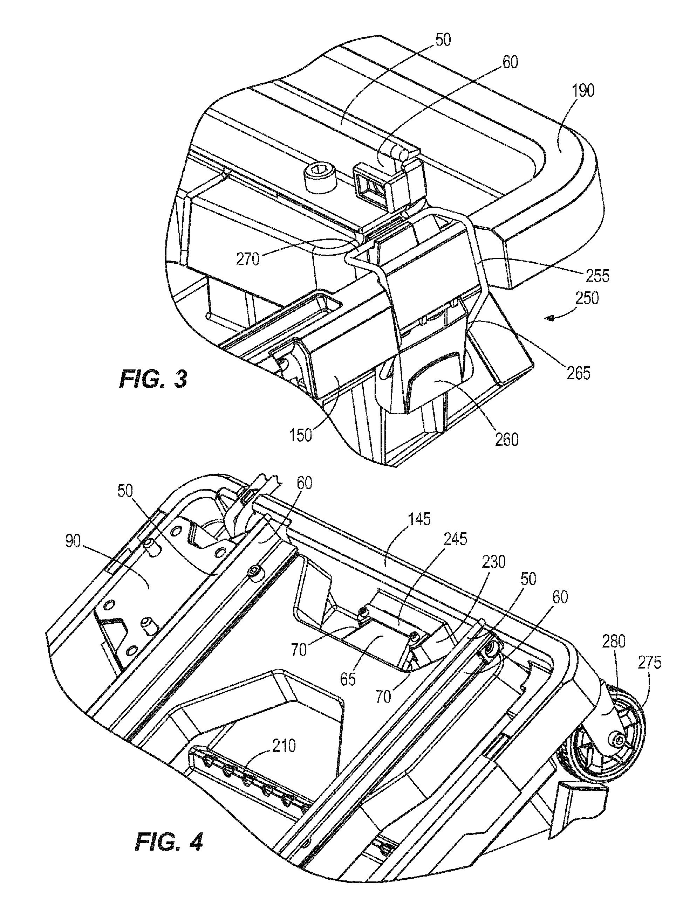

The frame 30 is a structural component that includes a pair of rails 50 that extend along a longitudinal axis 55 of the tile saw 10 and cooperate to define a guide. As is best illustrated in Figs. 3 and 4, the rails 50 are spaced apart from one another such that they are on opposite sides of the frame 30. In the illustrated construction, the rails 50 are substantially cylindrical rods that extend the length of the frame 30 and that are supported by a structural member 60 such as a channel component or an I-beam component. Each rail 50 is supported in a manner that allows for engagement of a bottom portion of the rail 50 as well as a top portion as will be discussed below.

The frame 30 also includes an engagement member in the form of a tab 65 that extends from one end of the frame 30 between the rails 50. As is best illustrated in Fig. 4, the tab 65 is a trapezoidal member that includes a narrow portion spaced away from the frame 30 and a wider portion at the frame 30. Thus, the tab 65 narrows as it extends away from the frame 30 and defines two tapered surfaces 70. While the illustrated tab 65 is trapezoidal, other shapes or combinations could be employed. For example, a cylindrical or conical tab could be employed. In addition, multiple tabs of different shapes could be employed in place of or in conjunction with the illustrated tab 65.

With reference to Fig. 3, the frame 30 also includes additional engagement members in the form of two hook members 75. Fig. 3 illustrates one of the hook members 75 which is substantially aligned with one of the rails 50. The other hook member 75 is positioned adjacent the same end of the opposite rail 50. Each hook member 75 defines a slot 80 that is preferably cylindrical and that extends in a direction substantially perpendicular to the longitudinal axis 55 of the saw 10. In preferred constructions, the slots 80 of the two hook members 75 are substantially aligned along a common axis. In the construction of Fig. 3, the hook members 75 are formed as part of the frame 30. However, other constructions may include hook members 75 that attach to the frame 30 using a fastener or other attachment means.

With reference to Fig. 1, the saw 10 includes an electrically-powered circular saw 20 (line powered or battery powered) supported by an arm 85 that fixedly attaches to a platform 90 of the frame 30. The arm 85 is shaped to support the saw 20 over the frame 30 in a position where the cutting blade 15 is approximately centered between the rails 50. The saw 20 supports the cutting blade 15 for rotation about an axis that is substantially normal to the axis of the saw 55. In preferred constructions, the circular saw 20 is movable to position the blade 15 at an angle that allows for angled cuts as well as the more common vertical or straight cuts.

With continued reference to Fig. 1, the table 25 includes a substantially planar top surface 95 that is arranged to support a workpiece to be cut. The top surface 95 includes a plurality of grooves or slots 100 arranged to direct the liquid coolant and collected cutting debris off the table and into the pan. In addition, the table includes three slots 105 that extend parallel to the saw axis 55 and that are shaped to receive the cutting blade 15 during a cut. A first of the slots 105a is arranged to receive the blade 15 during a vertical cut and is therefore substantially vertical. A second slot 105b is angled at a first angle (e.g., 45 degrees from vertical) to receive the saw blade 15 during a bevel cut at the first angle. A third slot 105c is angled at a second angle (e.g., 60 degrees from vertical) to receive the saw blade 15 during a bevel cut at the second angle. Additional slots 105 could be provided at different angles if desired.

The table 25 also includes a rear fence 110 that provides support for the workpiece as it is being pushed into the blade 15 during the cutting operation. In the illustrated construction, the fence 110 includes measuring indicia that help the user during the cut setup. In addition, the three slots 105 pass through the fence 110 to provide clearance for the cutting blade 15 during a cutting operation. In some constructions, a second fence is attachable to the table 25 to provide lateral support for the workpiece during a cut. Preferably, the second fence can be angled to support the workpiece in a non-square position to make cuts that are not parallel to the edges of the workpiece.

With continued reference to Fig. 1, the table 25 includes a plurality of roller elements 115 that are arranged to engage the rails 50 and support the table 25 on the rails 50. In the illustrated construction, three roller elements 115 are positioned on each side of the table 25 to engage the rail 50 on that side of the table 25. At least two of the roller elements 115 include a bottom roller that engages the bottom surface of the rail 50. The bottom rollers inhibit unwanted upward movement of the table 25 during a cutting operation. At least two of the roller elements 115 on each side also include a top element that engages the top surface of the rail 50 to support the table 25 for smooth rolling movement along the rails 50. In other constructions, the top and bottom rollers are replaced by linear bearings or other components that engage both sides of the rail 50 and inhibit all movement in directions normal to the rail 50.

The extension 40, best illustrated in Fig. 1 attaches to the pan 35, the frame 30, or the stand 45 and extends beyond the pan 35 behind the saw 20. The extension 40 is angled to catch lubricant that splashes in the rearward direction and direct the lubricant back to the pan 35. In some constructions, one or more side extensions are also employed to perform a similar function along the sides of the pan 35.

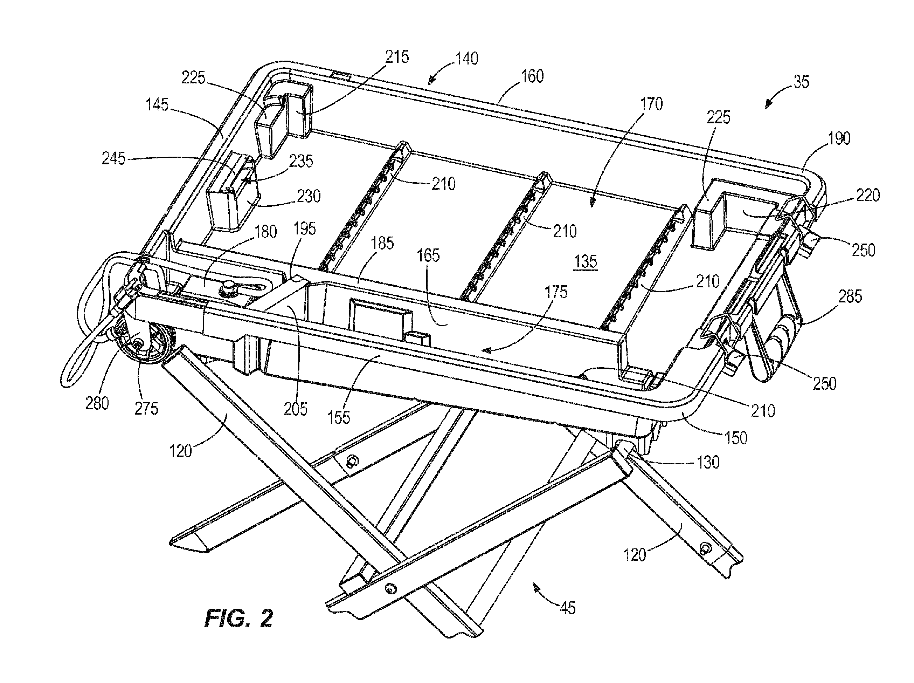

The stand 45, illustrated in Figs. 1 and 2 includes four legs 120 attached to one another in pairs to define two similar side members that move in a manner similar to a scissors. Each leg 120 includes a bottom portion that is adjustable to allow the user to adjust the ultimate height of the saw 10. Lateral members 125 extend between the two side members and connect them to one another. In addition, two rods 130 extend across the upper ends of the legs 120 to interconnect the side members and to provide an attachment point for the pan 35. In the illustrated construction, the rods 130 are cylindrical with other shapes or arrangements being possible.

Turning to Fig. 2, the pan 35 is shown with many of the other components removed. The pan 35 includes an inside bottom surface 135 that is surrounded by an outer wall 140 to define a volume that is capable of containing a liquid, typically water or other lubricants or coolants. In the illustrated construction, the outer wall 140 is substantially rectangular and includes a first end wall 145, a second end wall 150, a first side wall 155, and a second side wall 160. Of course other shaped outer walls 140 having more or fewer sides could be employed if desired.

An inner wall 165 extends between the first end wall 145 and the second end wall 150 in a direction substantially parallel to the first side wall 155. The inner wall 165 divides the volume into a large volume 170 and a small volume 175. A pump 180 is disposed in a corner between the inner wall 165 and the first side wall 155 adjacent the first end wall 145. The inner wall 165 has a height that positions a top surface 185 of the inner wall 165 at a level that is below a top surface 190 of the outer wall 140. In addition, a portion of the inner wall 165 is removed at the end opposite the pump 180 such that the top surface of the wall in this removed area is lower than the top surface 185 of the remainder of the inner wall 165.

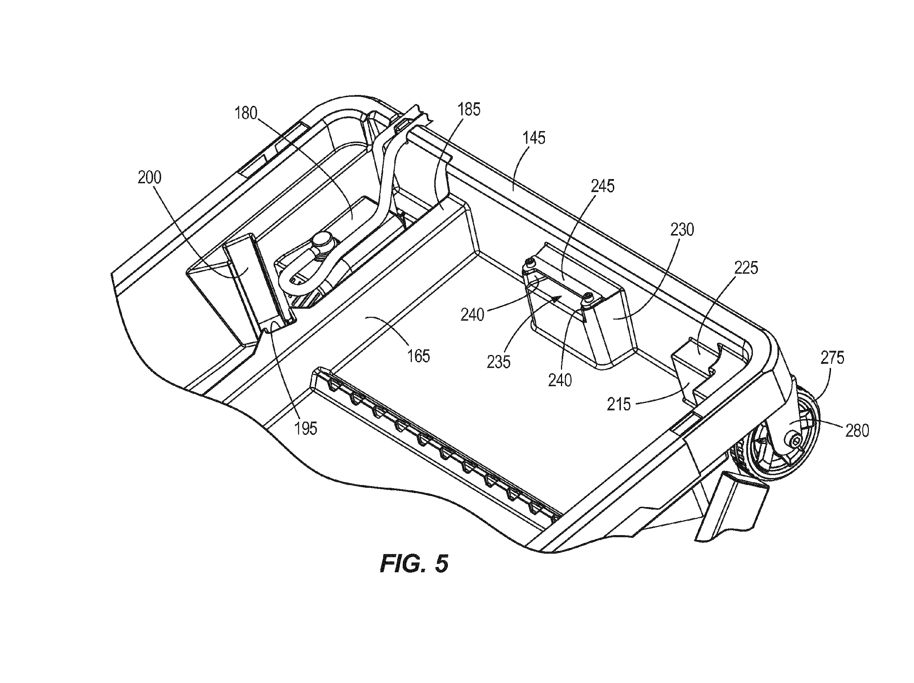

The inner wall 165 includes a first vertical slot 195 and the first side wall 155 includes a similar second vertical slot 200, best illustrated in Fig. 5. In the illustrated construction, the first vertical slot 195 and the second vertical slot 200 are axially offset from one another and are sized to receive a filter 205. The offset of the slots 195, 200 results in the filter 205 being supported at an oblique angle with respect to the saw axis 55 as shown in Fig. 2. In other constructions, the slots 195, 200 are not axially offset and the filter 205 is supported in a position that is substantially normal to the axis 55.

Several dams 210 extend across the bottom surface 135 between the second side wall 160 and the inner wall 165 and between the inner wall 165 and the first side wall 155. The dams 20 are formed and positioned to inhibit the passage of cutting debris. In the illustrated construction, three dams 210 are employed between the second side wall 160 and the inner wall 165 and two dams 210 are positioned between the inner wall 165 and the first side wall 155, with more or fewer being possible.

A first platform 215 is formed in the corner between the first end wall 145 and the second side wall 160 and a second platform 220 is formed in the corner between the second side wall 160 and the second end wall 150. The platforms 215, 220 include top surfaces 225 that are set at a height below the top surface 190 of the outer walls 140. The heights of the first platform 215, the second platform 220, and the inner wall 165 are selected to support the frame 30 at a desired height above the bottom surface 135 of the pan 35.

An engagement member in the form of an engagement platform 230, best illustrated in Fig. 5, is formed adjacent the center of the first end wall 145. The engagement platform 230 extends upward from the inside bottom surface 135 to a desired height. A pocket 235 is formed in the engagement platform 230 and is sized and shaped to receive the tab 65 of the frame 30 as illustrated in Fig. 4. In the illustrated construction, the pocket 235 includes side walls 240 that taper inward to receive the trapezoidal tab 65. A cover plate 245 attaches to the top of the engagement platform 230 and covers a portion of the pocket 235 to partially enclose the pocket 235. In other constructions, the cover plate 245 is formed as part of the engagement platform 230.

With reference to Figs. 2 and 3, the pan 35 includes two latches 250 that are movably attached to the pan 35 to selectively engage and couple the frame 30 to the pan 35. With reference to Fig. 3, the latch 250 is an over-center latch that includes a hook 255 and an actuator 260. The actuator 260 is pivotally attached to the pan 35 and a first end 265 of the hook 255 is pivotally attached to the actuator 260. A second end 270 of the hook 255 selectively engages one of the slots 80 of the adjacent hook member 75. The actuator 260 is movable between a non-engaged position in which the second end 270 of the hook 255 is movable into and out of engagement with the slot 80 and an engaged position in which the second end 270 of the hook 255 is disposed within the slot 80 and the hook 255 is pulled downward to firmly connect the frame 30 and the pan 35.

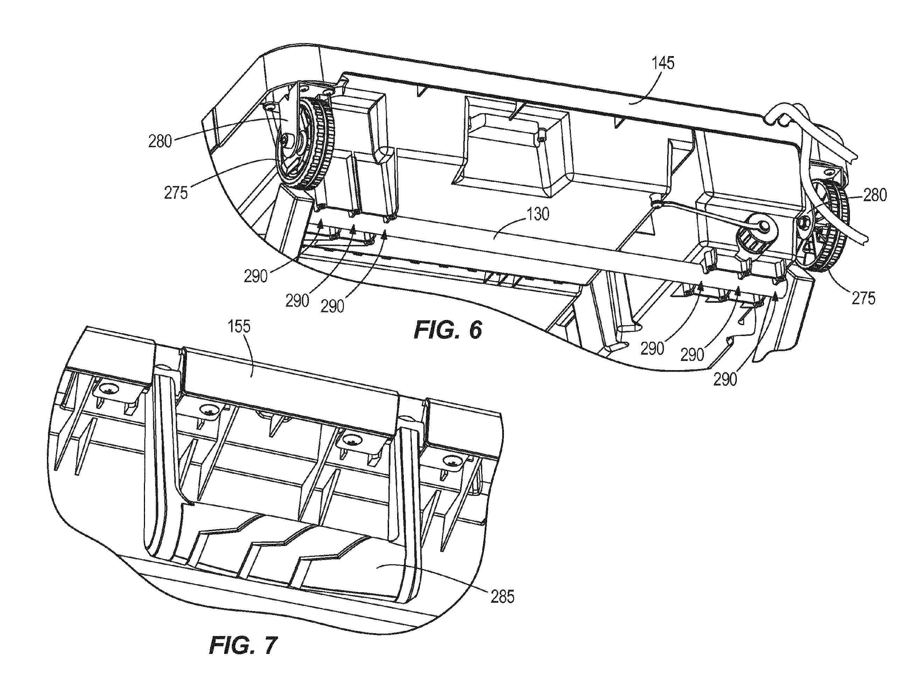

As illustrated in Figs. 2 and 6, the pan 35 also includes two wheels 275 supported for rotation adjacent the first end wall 145. Each wheel 275 is supported for rotation on a bracket 280 which is in turn attached to the pan 35. In the illustrated construction, the wheels 275 are disposed closely to the corners of the first end wall 145 and the first side wall 155 and the first end wall 145 and the second side wall 160, with other positions and arrangements being possible.

With reference to Figs. 2 and 7 a handle 285 is coupled to the pan 35 adjacent the second end wall 150 opposite the wheels 275. The handle 285 is generally U-shaped and is pivotally connected to the second end wall 150 and allows a user to pull the pan 35 while the two wheels 275 engage and roll along the ground.

As illustrated in Fig. 6, the bottom of the pan includes a plurality of slots 290 formed in two groups on opposite sides of the pan 35. In the illustrated construction, three C-shaped slots 290 are clustered on each side and are aligned along a common axis. The C-shaped slots 290 are sized to receive the rods 130 of the stand 45 to securely couple the pan 35 to the stand 45. A similar arrangement of C-shaped slots 290 is formed on the opposite end of the pan 35 to receive the second rod 130 of the stand 45.

With reference to Figs. 1, 3, and 4, the assembly of the wet tile saw 10 will now be described. The pan 35 is connected to the stand 45 by pushing the pan 35 downward firmly to engage the C-shaped slots 290 with the rods 130. As the rod 130 slides into the slots 290, the C-shape inhibits the unwanted removal and provides a secure coupling. Next, the user places the pump 180 and the frame 30 into the pan 35. The pump 180 is placed in the corner and the power connections and liquid feed lines are positioned as illustrated in Fig. 4. The frame 30 is supported by the inner wall 165, the first platform 215, and the second platform 220 such that the frame platform 90 covers the pump 180. The tab 65 fits within the pocket 235 with the tapered side walls 70, 240 engaging one another to align the frame 30 and restrain unwanted lateral movement. The cover plate 245 is then attached to the engagement platform 230 to inhibit unwanted upward movement of the tap 65 with respect to the pan 35. The latches 25 are then engaged with the frame 30 as illustrated in Fig. 3 to removably couple the frame 30 to the pan 35. The arm 85 supporting the saw 20 is then attached to the frame platform 90 and the table 25 is positioned on the rails 50 of the frame 30 to complete the assembly of the saw 10. Of course, one of ordinary skill in the art will realize that a different assembly process or order could be employed if desired.

In operation, the assembled saw 10 is positioned at the desired height for use. Water or another coolant is placed in the pan 35 until the pan 35 is filled to a desired operating level. Next, the piece to be cut is positioned on the table 25 and the saw blade 15 is positioned as desired. The saw 20 and the pump 180 are then started. The pump's operation could be tied to the saw 20 such that operation of the saw 20 automatically starts operation of the pump 180. Alternatively, the pump 180 and the saw 20 can be started and stopped separately. The pump 180 directs coolant to the desired locations around the workpiece and the cutting blade 15. The table 25 is then moved to engage the workpiece and the cutting blade 15 to make the desired cut. As material is removed, the coolant carries away both heat and cutting debris and drains back into the pan 35. The debris also collects in the pan 35 and settles to the bottom. As the coolant is drawn into the pump 180, the coolant flows past the dams 210 in the large volume 170. The dams 210 inhibit movement of the debris to aid in separating the debris from the coolant. Eventually, the coolant flows around the inner wall 165 and along the small volume 175 toward the pump 180. The arrangement of the inner wall 165 assures a long flow path for the coolant to allow sufficient time for the entrained debris to settle to the bottom. The filter 205 acts as a final filter to assure that debris is not drawn into the pump 180.

If a user wishes to move the saw 10, the pan 35 is removed from the stand 45 and placed on the ground. The user then grabs the handle 285 and picks up the second end of the saw 10. The wheels 275 rotate into contact with the ground, thereby allowing the user to pull the assembly 10 along the ground.

Various features and advantages of the invention are set forth in the following claims.

## Claims

1. A tile saw (10) for cutting a workpiece, the tile saw (10) comprising:
a frame (30) including a guide (50) that extends from a first end to a second end, a first engagement member (75) and a second engagement member (75) coupled to the frame (30) and disposed adjacent the first end, and a third engagement member (65) disposed adjacent the second end;
a saw (20) coupled to the frame (30) and operable to rotate a cutting blade about an axis;
a table (25) operable to support the workpiece, the table (25) coupled to the guide (50) and operable to move the workpiece into cutting engagement with the cutting blade;
a pan (35) positioned to support the frame (30) and to contain a quantity of coolant;
a fourth engagement member (235) coupled to the third engagement member (65), the tile saw being **characterized by** further comprising:
a first latch (250) selectively coupled to the first engagement member (75);
a second latch (250) selectively coupled to the second engagement member (75), the first latch (250), the second latch (250) and the fourth engagement member (235) cooperating to restrict movement of the frame (30) with respect to the pan (35), one of the third engagement (65) member and the fourth engagement member (235) is a tab and the other of the third engagement member (65) and the fourth engagement member (235) is a slot sized to receive the tab.

2. The tile saw (10) of claim 1, wherein:
the first engagement member (75) includes a first slot (80) sized to receive the first latch (250); and/or
the second engagement member (75) includes a second slot (80) sized to receive the second latch (250), the first slot (80) and the second slot (80) being parallel to one another; and/or
the first latch (250) is an over-center latch.

3. The tile saw (10) of any preceding claim, wherein the guide (50) includes a first guide rail (50) and a second guide rail (50) parallel to the first guide rail (50).

4. The tile saw (10) of claim 3, wherein the first latch (250) is disposed adjacent the first guide rail (50), the second latch (250) is disposed adjacent the second guide rail (50), and the third engagement member (65) is disposed between the first guide rail (50) and the second guide rail (50).

5. The tile saw (10) of any preceding claim, further comprising a pair of wheels (275) coupled to the pan (35) adjacent a first end of the pan (35) and a handle (285) pivotally coupled to a second end of the pan (35) opposite the first end.

6. The tile saw (10) of claim 1, wherein:
the guide (50) includes a first guide rail (50) and a second guide rail (50),
the table (25) is coupled to the first guide rail (50) and the second guide rail (50)
the pan (35) includes a first end adjacent a first end of the first guide rail (50) and a second end adjacent a second end of the first guide rail (50);
the first latch (250) is coupled to the first end of the pan (35) to selectively attach the pan (35) to the frame (30);
a pair of wheels (275) is coupled to the pan (35) adjacent the second end of the pan (35); and
a handle (285) is coupled to the first end of the pan (35).

7. The tile saw (10) of claim 6, wherein the first engagement member includes a first slot (80) adjacent the first guide rail (50) and the second engagement member includes a second slot (80) parallel to the first slot (80) and adjacent the second guide rail (50).

8. The tile saw (10) of claim 7, wherein the latch (250) is a first latch (250) that is selectively engageable with the first slot (80), and wherein a second latch (250) is selectively engageable with the second slot (80).

9. The tile saw (10) of any preceding claim, further comprising a pump (180) coupled to the pan (35) and operable to pump coolant from the pan (35) to the cutting blade.

10. The tile saw (10) of any one of claims 6 to 9, wherein the third engagement member further comprises one of a tab (65) and a groove (235), and wherein the pan (35) includes the other of the tab (65) and the groove (235), the tab (65) engageable with the groove (235) to inhibit movement of the frame (30) with respect to the pan (35).

11. The tile saw (10) of any one of claims 6 to 10, wherein the latch (250) is an over-center latch.

12. The tile saw (10) of claim 1, wherein:
the pan (35) selectively coupled to the frame (30) and includes a first end and a second end;
the slot is formed at the first end of the pan (35) and is operable to receive the third engagement member (65);
the first latch (250) is attached to the pan (35) and is selectively coupled to the frame (30);
the second latch (250) is attached to the pan (35) and is selectively coupled to the frame (30), the first latch (250), the second latch (250) and the slot cooperating to fixedly attach the frame (30) to the pan (35);
a pair of wheels (275) is coupled to the pan (35) adjacent the first end of the pan (35); and
a handle (285) is coupled to the first end of the pan (35).

13. The tile saw (10) of claim 12, wherein the first latch (250) includes an over center latch and the second latch (250) includes an over center latch.

14. The tile saw (10) of any preceding claim, further comprising a plurality of recesses (290) formed as part of the pan (35) and adapted to receive a support stand (45) to allow the support stand (45) to support the pan (35), the frame (30), the saw (20), and the table (25) for operation.

## Patentansprüche

1. Fliesensäge (10) zum Schneiden eines Werkstücks, wobei die Fliesensäge (10) Folgendes umfasst:
einen Rahmen (30), der eine Führung (50), die sich von einem ersten Ende zu einem zweiten Ende erstreckt, ein erstes Eingriffselement (75) und ein zweites Eingriffselement (75), die an den Rahmen (30) gekoppelt und angrenzend an das erste Ende angeordnet sind, und ein drittes Eingriffselement (65), das angrenzend an das zweite Ende angeordnet ist, einschließt,
eine Säge (20), die an den Rahmen (30) gekoppelt und funktionsfähig ist, um, eine Schneidklinge um eine Achse zu drehen,
einen Tisch (25), der funktionsfähig ist, um das Werkstück zu tragen, wobei der Tisch (25) an die Führung (50) gekoppelt und funktionsfähig ist, um das Werkstück in einen Schneideingriff mit der Schneidklinge zu bewegen,
eine Wanne (35), die dafür angeordnet ist, den Rahmen (30) zu tragen und eine Menge eines Kühlmittels zu enthalten,
ein viertes Eingriffselement (235), das an das dritte Eingriffselement (65) gekoppelt ist, wobei die Fliesensäge **dadurch gekennzeichnet ist, dass** sie ferner Folgendes umfasst:
eine erste Klinke (250), die selektiv an das erste Eingriffselement (75) gekoppelt wird,
eine zweite Klinke (250), die selektiv an das zweite Eingriffselement (75) gekoppelt wird, wobei die erste Klinke (250), die zweite Klinke (250) und das vierte Eingriffselement (235) zusammenwirken, um eine Bewegung des Rahmens (30) in Bezug auf die Wanne (35) einzuschränken, wobei das eine von dem dritten Eingriffselement (65) und dem vierten Eingriffselement (235) eine Lasche ist und das andere von dem dritten Eingriffselement (65) und dem vierten Eingriffselement (235) ein Schlitz, der dafür bemessen ist, die Lasche aufzunehmen, ist.

2. Fliesensäge (10) nach Anspruch 1, wobei
das erste Eingriffselement (75) einen ersten Schlitz (80), der dafür bemessen ist, die erste Klinke (250) aufzunehmen, einschließt und/oder
das zweite Eingriffselement (75) einen zweiten Schlitz (80), der dafür bemessen ist, die zweite Klinke (250) aufzunehmen, einschließt, wobei der erste Schlitz (80) und der zweite Schlitz (80) parallel zueinander sind und/oder
die erste Klinke (250) eine Exzenterklinke ist.

3. Fliesensäge (10) nach einem der vorhergehenden Ansprüche, wobei die Führung (50) eine erste Führungsschiene (50) und eine zweite Führungsschiene (50), parallel zu der ersten Führungsschiene (50), einschließt.

4. Fliesensäge (10) nach Anspruch 3, wobei die erste Klinke (250) angrenzend an die erste Führungsschiene (50) angeordnet ist, die zweite Klinke (250) angrenzend an die zweite Führungsschiene (50) angeordnet ist und das dritte Eingriffselement (65) zwischen der ersten Führungsschiene (50) und der zweiten Führungsschiene (50) angeordnet ist.

5. Fliesensäge (10) nach einem der vorhergehenden Ansprüche, die ferner ein Paar von Rädern (275), die angrenzend an ein erstes Ende der Wanne (35) an die Wanne (35) gekoppelt sind, und einen Griff (285), der schwenkbar an ein zweites Ende der Wanne (35), gegenüber dem ersten Ende, gekoppelt ist, umfasst.

6. Fliesensäge (10) nach Anspruch 1, wobei:
die Führung (50) eine erste Führungsschiene (50) und eine zweite Führungsschiene (50) einschließt,
der Tisch (25) an die erste Führungsschiene (50) und die zweite Führungsschiene (50) gekoppelt ist,
die Wanne (35) ein erstes Ende, angrenzend an ein erstes Ende der ersten Führungsschiene (50), und ein zweites Ende, angrenzend an ein zweites Ende der ersten Führungsschiene (50), einschließt,
die erste Klinke (250) an das erste Ende der Wanne (35) gekoppelt ist, um die Wanne (35) selektiv an dem Rahmen (30) zu befestigen,
ein Paar von Rädern (275) angrenzend an das zweite Ende der Wanne (35) an die Wanne (35) gekoppelt ist und
ein Griff (285) an das erste Ende der Wanne (35) gekoppelt ist.

7. Fliesensäge (10) nach Anspruch 6, wobei das erste Eingriffselement einen ersten Schlitz (80), angrenzend an die erste Führungsschiene (50), einschließt und das zweite Eingriffselement einen zweiten Schlitz (80), parallel zu dem ersten Schlitz (80) und angrenzend an die zweite Führungsschiene (50), einschließt.

8. Fliesensäge (10) nach Anspruch 7, wobei die Klinke (250) eine erste Klinke (250) ist, die selektiv mit dem ersten Schlitz (80) in Eingriff gebracht werden kann, und wobei eine zweite Klinke (250) selektiv mit dem zweiten Schlitz (80) in Eingriff gebracht werden kann.

9. Fliesensäge (10) nach einem der vorhergehenden Ansprüche, die ferner eine Pumpe (180) umfasst, die an die Wanne (35) gekoppelt und funktionsfähig ist, um Kühlmittel von der Wanne (35) zu der Schneidklinge zu pumpen.

10. Fliesensäge (10) nach einem der Ansprüche 6 bis 9, wobei das dritte Eingriffselement ferner eine von einer Lasche (65) und einer Rille (235) umfasst und wobei die Wanne (35) das andere von einer Lasche (65) und einer Rille (235) einschließt, wobei die Lasche (65) mit der Rille (235) in Eingriff gebracht werden kann, um eine Bewegung des Rahmens (30) in Bezug auf die Wanne (35) zu hemmen.

11. Fliesensäge (10) nach einem der Ansprüche 6 bis 10, wobei die Klinke (250) eine Exzenterklinke ist.

12. Fliesensäge (10) nach Anspruch 1, wobei:
die Wanne (35) selektiv an den Rahmen (30) gekoppelt wird und ein erstes Ende und ein zweites Ende einschließt,
der Schlitz an dem ersten Ende der Wanne (35) geformt ist und funktionsfähig ist, um das dritte Eingriffselement (65) aufzunehmen,
die erste Klinke (250) an der Wanne (35) befestigt ist und selektiv an den Rahmen (30) gekoppelt wird,
die zweite Klinke (250) an der Wanne (35) befestigt ist und selektiv an den Rahmen (30) gekoppelt wird, wobei die erste Klinke (250), die zweite Klinke (250) und der Schlitz zusammenwirken, um den Rahmen (30) unbeweglich an der Wanne (35) zu befestigen,
ein Paar von Rädern (275) angrenzend an das erste Ende der Wanne (35) an die Wanne (35) gekoppelt ist und
ein Griff (285) an das zweite Ende der Wanne (35) gekoppelt ist.

13. Fliesensäge (10) nach Anspruch 12, wobei die erste Klinke (250) eine Exzenterklinke einschließt und die zweite Klinke (250) eine Exzenterklinke einschließt.

14. Fliesensäge (10) nach einem der vorhergehenden Ansprüche, die ferner mehrere Aussparungen (290) umfasst, die als ein Teil der Wanne (35) geformt und dafür eingerichtet sind, einen Stützständer (45) aufzunehmen, um zu ermöglichen, dass der Stützständer (45) die Wanne (35), den Rahmen (30), die Säge (20) und den Tisch (25) für den Betrieb trägt.

## Revendications

1. Scie à tuiles (10) pour couper une pièce à travailler, la scie à tuiles (10) comprenant :
un cadre (30) englobant un guide (50) s'étendant d'une première extrémité vers une deuxième extrémité, un premier élément d'engagement (75) et un deuxième élément d'engagement (75) accouplés au cadre (30) et agencés près de la première extrémité, et un troisième élément d'engagement (65) agencé près de la deuxième extrémité ;
une scie (20), accouplée au cadre (30) et servant à faire tourner une lame de coupe autour d'un axe ;
une table (25), servant à supporter la pièce à travailler, la table (25) étant accouplée au guide (50) et servant à déplacer la pièce à travailler en vue de son engagement de coupe dans la lame de coupe ;
une cuve (35), positionnée de sorte à supporter le cadre (30) et contenant une quantité de liquide de refroidissement ;
un quatrième élément d'engagement (235), accouplé au troisième élément d'engagement (65), la scie à tuiles étant **caractérisée en ce qu'**elle comprend en outre :
un premier verrou (250), accouplé de manière sélective au premier élément d'engagement (75) ;
un deuxième verrou (250), accouplé de manière sélective au deuxième élément d'engagement (75), le premier verrou (250), le deuxième verrou (250) et le quatrième élément d'engagement (235) coopérant en vue de limiter le déplacement du cadre (30) par rapport à la cuve (35), un élément du troisième élément d'engagement (65) et du quatrième élément d'engagement (235) étant une patte, l'autre élément du troisième élément d'engagement (65) et du quatrième élément d'engagement (235) étant une fente dimensionnée de sorte à recevoir la patte.

2. Scie à tuiles (10) selon la revendication 1, dans laquelle :
le premier élément d'engagement (75) englobe une première fente (80), dimensionnée de sorte à recevoir le premier verrou (250) ; et /ou
le deuxième élément d'engagement (75) englobe une deuxième fente (80), dimensionnée de sorte à recevoir le deuxième verrou (250), la première fente (80) et la deuxième fente (80) étant parallèles l'une à l'autre ; et/ou
le premier verrou (250) est un verrou à arc-boutement.

3. Scie à tuiles (10) selon l'une quelconque des revendications précédentes, dans laquelle le guide (50) englobe un premier rail de guidage (50) et un deuxième rail de guidage (50), parallèle au premier rail de guidage (50).

4. Scie à tuiles (10) selon la revendication 3, dans laquelle le premier verrou (250) est agencé près du premier rail de guidage (50), le deuxième verrou (250) étant agencé près du deuxième rail de guidage (50) et le troisième élément d'engagement (65) étant agencé entre le premier rail de guidage (50) et le deuxième rail de guidage (50).

5. Scie à tuiles (10) selon l'une quelconque des revendications précédentes, comprenant en outre une paire de roues (275), accouplée à la cuve (35) près d'une première extrémité de la cuve (35), et une poignée (285), accouplée de manière pivotante à une deuxième extrémité de la cuve (35), opposée à la première extrémité.

6. Scie à tuiles (10) selon la revendication 1, dans laquelle :
le guide (50) englobe un premier rail de guidage (50) et un deuxième rail de guidage (50) ;
la table (25) est accouplée au premier rail de guidage (50) et au deuxième ail de guidage (50) ;
la cuve (35) englobe une première extrémité adjacente à une première extrémité du premier rail de guidage (50) et une deuxième extrémité adjacente à une deuxième extrémité du premier rail de guidage (50) ;
le premier verrou (250) est accouplé à la première extrémité de la cuve (35) pour fixer de manière sélective la cuve (35) sur le cadre (30) ;
une paire de roues (275) est accouplée à la cuve (35) adjacente à la deuxième extrémité de la cuve (35) ; et
une poignée (285) est accouplée à la première extrémité de la cuve (35).

7. Scie à tuiles (10) selon la revendication 6, dans laquelle le premier élément d'engagement englobe une première fente (80) adjacente au premier rail de guidage (50), le deuxième élément d'engagement englobant une deuxième fente (80) parallèle à la première fente (80) et adjacente au deuxième rail de guidage (50).

8. Scie à tuiles (10) selon la revendication 7, dans laquelle le verrou (250) est un premier verrou (250) pouvant s'engager de manière sélective dans la première fente (80), le deuxième verrou (250) pouvant s'engager de manière sélective dans la deuxième fente (80).

9. Scie à tuiles (10) selon l'une quelconque des revendications précédentes, comprenant en outre une pompe (180) accouplée à la cuve (35) et servant à pomper le liquide de refroidissement de la cuve (35) vers la lame de coupe.

10. Scie à tuiles (10) selon l'une quelconque des revendications 6 à 9, dans laquelle le troisième élément d'engagement comprend en outre l'un parmi une patte (65) et une rainure (235), et dans laquelle la cuve (35) englobe l'autre parmi la patte (65) et la rainure (235), la patte (65) pouvant s'engager dans la rainure (235) pour empêcher le déplacement du cadre (30) par rapport à la cuve (35).

11. Scie à tuiles (10) selon l'une quelconque des revendications 6 à 10, dans laquelle le verrou (250) est un verrou à arc-boutement.

12. Scie à tuiles (10) selon la revendication 1, dans laquelle :
la cuve (35) est accouplée de manière sélective au cadre (30) et englobe une première extrémité et une deuxième extrémité ;
la fente est formée au niveau de la première extrémité de la cuve (35) et est destinée à recevoir le troisième élément d'engagement (65) ;
le premier verrou (250) et fixé sur la cuve (35) et est accouplé de manière sélective au cadre (30) ;
le deuxième verrou (250) est fixé sur la cuve (35) et est accouplé de manière sélective au cadre (30), le premier verrou (250), le deuxième verrou (250) et la fente coopérant pour fixer fermement le cadre (30) sur la cuve (35) ;
une paire de roues (275) est accouplée à la cuve (35) adjacente à la première extrémité de la cuve (35) ; et
une poignée (285) est accouplée à la première extrémité de la cuve (35).

13. Scie à tuiles (10) selon la revendication 12, dans laquelle le premier verrou (250) englobe un verrou à arc-boutement, le deuxième verrou (250) englobant un verrou à arc-boutement.

14. Scie à tuiles (10) selon l'une quelconque des revendications précédentes, comprenant en outre plusieurs évidements (290) formés en tant que partie de la cuve (35) et adaptés pour recevoir un socle de support (45), pour permettre au socle de support (45) de supporter la cuve (35), le cadre (30), la scie (20) et la table (25) en vue de leur fonctionnement.
